# FASCICULE DE BREVET EUROPEEN

(11) **EP 1 989 845 B1**
(45) Date de publication et mention de la délivrance du brevet: **19.12.2018**
(21) Numéro de dépôt: 07730892.2
(22) Date de dépôt: 31.01.2007
(51) Int. Cl.: H04L 29/08, H04L 12/58

(54) **GESTION D'UNE COMMUNICATION ENTRE UN SYSTÈME DE TÉLÉCOMMUNICATIONS ET UN SERVEUR**
VERWALTUNG EINER KOMMUNIKATION ZWISCHEN EINEM TELEKOMMUNIKATIONSSYSTEM UND EINEM SERVER
MANAGING A COMMUNICATION BETWEEN A TELECOMMUNICATIONS SYSTEM AND A SERVER

(30) Priorité: 15.02.2006 FR 0601323
(43) Date de publication de la demande: 12.11.2008
(73) Titulaire: Orange, 75015 Paris (FR)
(72) Inventeur: FLURY, Thibaud, F-38100 Grenoble (FR); DEVIN, Vincent, F-38100 Grenoble (FR); PIERSON, Jérôme, F-38000 Grenoble (FR)
(74) Mandataire: Cabinet Plasseraud
(86) Numéro de dépôt international: PCT/FR2007/000175
(87) Numéro de publication internationale: WO 2007/093684

(56) Documents cités:
- EP-A- 1 139 608
- WO-A-01/69387
- WO-A-2005/094021
- US-A1- 2003 023 691

## Description

La présente invention concerne le domaine des télécommunications, et plus particulièrement la gestion d'une communication dans un réseau de télécommunications offrant notamment un service de type 'messagerie instantanée'.

Dans un réseau de télécommunications, qui propose par exemple un service de messagerie instantanée ou 'chat', des messages textuels courts peuvent être échangés entre différents utilisateurs via des interfaces graphiques respectives proposées sur des terminaux clients.

Certains réseaux proposent également d'échanger des messages vocaux via des dispositifs de type enceintes ou microphones, ou encore des messages multimédia notamment via des caméras, des micros et des écrans.

Dans ce type de réseau, une communication instantanée peut être établie entre au moins des premier et second terminaux clients d'un serveur en charge de gérer des échanges de données entre ces deux terminaux. Dans un tel contexte, lorsqu'un utilisateur du premier terminal souhaite se déplacer dans un autre lieu géographique et communiquer avec le second terminal via un troisième terminal situé dans cet autre lieu géographique, la communication entre les premier et second terminaux est interrompue, et une nouvelle communication est établie entre les second et troisième terminaux. Un tel déplacement de l'utilisateur requiert donc une manipulation de la part de l'utilisateur consistant à se déconnecter via le premier terminal et se connecter via le troisième terminal.

Par ailleurs, le serveur, en général, maintient une base de données dans laquelle les terminaux clients des utilisateurs sont respectivement associés à des états qui peuvent représenter l'état de l'utilisateur vis-à-vis du service de messagerie instantanée, comme par exemple l'état 'absent' ou encore l'état 'connecté' ou 'déconnecté' ou également 'inactif'. Selon le type de service, un nombre plus ou moins important d'états peut être géré. Ainsi, le serveur est en mesure d'informer un terminal client des états respectifs des autres terminaux clients du réseau.

Le serveur maintient cette base de données à jour, et à cet effet, mémorise les changements d'états qui correspondent à un terminal client.

De tels changements d'état peuvent être implicites, c'est-à-dire être gérés automatiquement par le serveur en fonction de certains paramètres correspondant au terminal client. Par exemple, un terminal client peut être placé dans l'état 'déconnecté' de manière automatique par le serveur dans le cas où le serveur ne peut pas joindre ce terminal ou encore dans le cas où une période d'inactivité relativement longue a été détectée pour ce terminal client.

Mais, généralement, les changements d'état sont explicites, c'est-à-dire requis explicitement par l'utilisateur du terminal client, et nécessitent donc une manipulation de la part de l'utilisateur. Ainsi, par exemple, un terminal client peut fournir à son utilisateur une liste d'états gérés par le serveur. De cette façon, l'utilisateur qui s'absente peut par exemple sélectionner l'état 'absent'.

En outre, lorsqu'un utilisateur dispose de différents types de terminaux, tels qu'un micro, une enceinte ou encore un écran, et lorsqu'il souhaite changer de type de communications, pour passer notamment d'un terminal présentant une sortie son à un terminal présentant une interface graphique, une manipulation manuelle de sa part est requise de sorte à se connecter au terminal correspondant au type de communication recherché.

Ainsi, dans ces réseaux offrant un service de communication, comme par exemple un service de type messagerie instantanée, l'utilisation d'un terminal requiert généralement de nombreuses interventions manuelles plus ou moins complexes de la part de son utilisateur, notamment par rapport à la gestion d'un déplacement de l'utilisateur, ou par rapport à la gestion de l'état du terminal client, ou encore par rapport au type de communication.

Ces manipulations de la part de l'utilisateur pouvant être complexes et coûteuses en temps, il est intéressant d'améliorer le confort d'utilisation de tels terminaux clients.

La présente invention vise à pallier les inconvénients précités.

Le document WO 01/69387 A1 comprend l'art antérieur, et concerne une plateforme de notification d'un utilisateur apte à recevoir des notifications destinées à l'utilisateur en provenance d'une pluralité de sources et comprenant un analyseur de contexte qui détermine l'état de cet utilisateur à partir d'informations représentatives de sa localisation et de son niveau d'attention. La plateforme exploite ces informations pour décider quand et comment notifier l'utilisateur et notamment par l'intermédiaire de quel dispositif d'interface.

Un premier aspect de la présente invention propose un procédé de, selon la revendication 1, d'une communication entre un réseau et un système de télécommunications comprenant une passerelle, une pluralité de dispositifs d'interface, chacun pouvant être relié à la passerelle, et au moins un capteur d'informations relatives aux environnements respectifs desdits dispositifs d'interface.

Un deuxième aspect de la présente invention propose une entité de, selon la revendication 7, dans le système de télécommunications.

Un troisième aspect de la présente invention propose un programme d'ordinateur destiné à être installé dans une entité de supervision, comprenant des instructions aptes à mettre en oeuvre un procédé selon le premier aspect de la présente invention, lors d'une exécution du programme par des moyens de traitement de l'entité de supervision selon le deuxième aspect de la présente invention.

Un quatrième aspect de la présente invention propose un support d'enregistrement lisible par un ordinateur sur lequel est enregistré le programme d'ordinateur selon le sixième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre un réseau de télécommunications selon un mode de réalisation de la présente invention ;
- la figure 2 illustre une architecture fonctionnelle d'une passerelle selon un mode de réalisation de la présente invention ;
- la figure 3 illustre des étapes principales d'un procédé de gestion de communication selon un mode de réalisation de la présente invention ;
- la figure 4 illustre une architecture d'une entité de supervision selon un mode de réalisation de la présente invention.

Un objectif de la présente invention est de proposer un système de télécommunications aisé d'utilisation, basé sur une adaptation automatique des interfaces offertes à un utilisateur respectivement via différents terminaux, en fonction de caractéristiques environnementales relatives à l'utilisateur et aux terminaux.

Selon une architecture de la présente invention, un système de télécommunications client comprend une pluralité de terminaux clients d'un même utilisateur.

Dans les sections suivantes, un terminal client correspond à un dispositif d'interface offrant au moins une interface à l'utilisateur. Un dispositif d'interface peut notamment correspondre à un écran, un clavier, des enceintes acoustiques, un microphone ou une caméra, ou encore une combinaison quelconque de ces dispositifs d'interface.

A titre d'exemple, la présente invention est décrite dans les sections suivantes dans son application à un système de télécommunications client d'un serveur de messagerie instantanée. Toutefois, il convient de noter qu'aucune limitation n'est attachée à ce type de service de communication. Ainsi, il est aisé d'adapter la description suivante à tout autre type de service de télécommunications dans lequel un système client ayant plusieurs dispositifs d'interface communique avec au moins un terminal client, situé à l'extérieur du système de télécommunication, via un serveur de service de communications.

Un objectif de la présente invention est de sélectionner, en fonction d'informations ambiantes captées par un ou plusieurs capteurs de ce système de télécommunications, au moins un dispositif d'interface parmi une pluralité de dispositifs d'interface compris dans le système de télécommunications client de façon à utiliser le dispositif d'interface sélectionné pour la communication de l'utilisateur.

Aucune limitation n'est attachée au type des informations captées destinées à permettre une sélection pertinente du dispositif d'interface. En outre, aucune limitation n'est attachée au nombre de dispositifs d'interface pouvant être sélectionnés pour la communication de l'utilisateur d'un système de télécommunications client selon un mode de réalisation de la présente invention, ni même au nombre de capteurs que comprend un tel système.

Dans un mode de réalisation de la présente invention, les capteurs du système sont adaptés pour capter des informations relatives aux environnements respectifs des dispositifs d'interface 14-16. Ces informations comprennent ici des premières informations relatives à la localisation de l'utilisateur dans les environnements respectifs des dispositifs d'interface 14-16 du système 10 ainsi que des secondes informations relatives aux contextes sensoriels dans les environnements respectifs des dispositifs d'interface 14-16.

Ainsi, les premières informations permettent d'évaluer une distance entre l'utilisateur et les différents dispositifs d'interface du système. De préférence, sur la base de telles informations, le dispositif d'interface sélectionné correspond à celui qui est le plus le plus accessible depuis la localisation de l'utilisateur. Le système de télécommunications client est alors en mesure de s'adapter de manière automatique au déplacement de l'utilisateur dans l'espace dans lequel le système est installé.

Les secondes informations captées caractérisent le contexte sensoriel de chacun des dispositifs d'interface. On entend par 'contexte sensoriel' associé à un dispositif d'interface, le contexte ambiant dans l'environnement de ce dispositif d'interface, défini par un paramètre sensoriel (luminosité ambiante, niveau sonore ambiant, etc.), l'environnement considéré du dispositif d'interface correspondant à la zone dans laquelle l'utilisateur pourrait se trouver pour communiquer via ce dispositif d'interface. Ainsi, pour un dispositif d'interface du type écran, une seconde information peut correspondre à l'exposition lumineuse de l'écran. Dans ce cas, si le système client propose deux écrans pour communiquer, l'écran soumis à la plus faible luminosité est de préférence sélectionné. Une seconde information relative à un dispositif d'interface équipé d'une sortie son peut correspondre à un niveau sonore capté à proximité de cette sortie son. Ainsi, si le système client propose deux dispositifs d'interface avec une sortie son, celui présentant le niveau sonore capté le plus faible est de préférence sélectionné.

Les informations captées par les capteurs peuvent être agrégées et interprétées afin de déterminer notamment des caractéristiques de localisation et de contexte sensoriel à partir desquelles une sélection de dispositif d'interface peut être mise en oeuvre selon l'invention.

Les étapes d'agrégation et d'interprétation de ces informations ne font pas l'objet de la présente invention. Des systèmes, qui permettent de faire ces étapes, sont bien connus de l'homme du métier.

Un autre objectif de la présente invention est de mettre en oeuvre un mode de communication sélectionné parmi une pluralité de modes de communications offerts dans le système clients via la pluralité de dispositifs d'interface, cette sélection étant basée sur le contexte de communications ambiant de l'utilisateur. On entend par les termes 'mode de communication', les différentes variantes de techniques de communication, telle qu'une communication sonore, ou encore visuelle, ou une combinaison d'une communication visuelle et sonore. On entend également par ces termes la possibilité de communiquer en émission et/ou en réception.

Ainsi, dans le contexte de la messagerie instantanée, il peut être avantageux de sélectionner un dispositif d'interface proposant une sortie sonore plutôt qu'un dispositif d'interface graphique, ou écran, lorsque l'écran est détecté, sur la base des secondes informations captées, comme étant exposé à la lumière et donc pas lisible par l'utilisateur, alors qu'aucun bruit n'est détecté autour du dispositif d'interface sonore.

Par conséquent, un utilisateur peut par exemple utiliser un dispositif de type téléphone alors que le terminal client de son interlocuteur utilise un clavier et un écran de manière classique. Une conversion de données correspondant au texte reçu depuis l'interlocuteur en données correspondant à une sortie sonore est alors effectuée.

Si, en réponse au message sonore reçu, l'utilisateur répond vocalement, alors, la parole de l'utilisateur est convertie en un format correspondant au texte à afficher, par exemple, sur l'écran du terminal de l'interlocuteur. Une fonction de conversion est donc avantageusement prévue dans le système client selon un mode de réalisation de la présente invention.

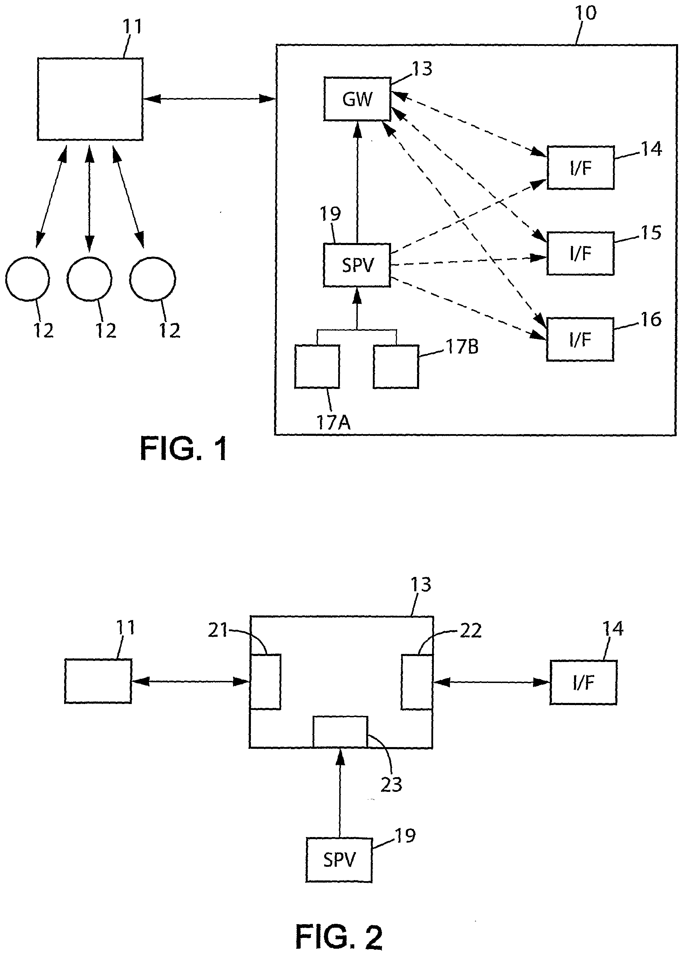

La figure 1 illustre une architecture d'un système de télécommunications selon un mode de réalisation de la présente invention et d'un réseau offrant un service de télécommunications auquel peut se connecter un tel système de télécommunications.

Un système de télécommunications client 10 peut être en communication avec d'autres terminaux clients 12 via un serveur de messagerie instantanée 11 dans le réseau considéré. Le système de télécommunications 10 comprend une pluralité de dispositifs d'interface 14-16 qui offrent chacun un moyen de communiquer via le serveur 11 entre un utilisateur du système client 10 et un terminal client 12.

Le système client 10 comprend également des capteurs 17A adaptés pour capter des informations de localisation et des capteurs 17B adaptés pour capter des informations de contexte sensoriel. Ces capteurs 17A et 17B ont pour rôle de capter des informations relatives à l'environnement des dispositifs d'interface 14-16. En l'espèce, les capteurs 17A ont pour rôle de capter des premières informations de localisation d'un utilisateur dans les environnements respectifs des dispositifs d'interface 14-16 et, les capteurs 17B, des informations relatives aux contextes sensoriels, lesquels sont définis par des paramètres sensoriels (ici luminosité et niveau sonore), dans les environnements respectifs des dispositifs d'interface 14-16.

Les étapes de centralisation, d'agrégation et d'interprétation des informations captées peuvent être réalisées au niveau d'une entité centrale de supervision 19. Cette entité de supervision est également adaptée pour :
- sélectionner un dispositif d'interface parmi les trois dispositifs d'interface 14-16 en fonction du traitement des informations captées, et
- mettre en relation le dispositif d'interface sélectionné avec une passerelle client 13, ici intégrée au système client 10, de sorte à mettre en communication le dispositif d'interface sélectionné et le serveur 11.

La figure 2 illustre une architecture fonctionnelle de la passerelle 13 selon un mode de réalisation de la présente invention. La passerelle cliente 13 représente l'interface du système client 10 avec le serveur 11.

Dans un mode de réalisation de la présente invention, la passerelle 13 est adaptée pour gérer des échanges de messages selon un protocole commun avec le serveur 11 de sorte que la mise en oeuvre de la présente invention n'induit pas de modifications au niveau du serveur 11.

Une telle passerelle 13 a donc une première interface 21 adaptée pour recevoir, respectivement envoyer, un message depuis, respectivement vers, un autre terminal client 12 via le serveur 11. Elle est également adaptée pour recevoir depuis le serveur 11 une notification de changement d'état d'un autre terminal client 12 et, inversement, notifier au serveur 11 un changement d'état du système 10 selon un mode de réalisation de la présente invention.

Dans le cas où le système 10 propose une liste d'états comprenant non seulement les états 'standards' tels que définis par le protocole utilisé entre les clients et le serveur 11, mais également d'autres états, nouveaux, gérés par le système client 10 selon un mode de réalisation de la présente invention, la passerelle 13 est alors capable de transmettre ces autres états 'non standards'.

Ces nouveaux états, dits "non standards", peuvent par exemple être accolés aux états 'standards' connus par le serveur 11 en utilisant une syntaxe particulière de commentaire, et donc ils peuvent être transmis en association auxdits états 'standards' depuis la passerelle 13 vers le serveur 11. Ainsi, par exemple, l'état 'absent' peut être associé à un commentaire indiquant une raison d'absence, telle que 'parti manger'.

Une telle syntaxe permet avantageusement d'étendre le nombre d'états possibles du système client 10 selon un mode de réalisation et d'enrichir l'information véhiculée par les notifications de changement d'états.

Cette passerelle 13 présente en outre une deuxième interface 22 adaptée pour échanger des messages avec le ou les dispositifs d'interface 14-16 qui ont été sélectionnés et reliés à la passerelle 13. Ainsi, le ou les dispositifs d'interface 14-16 peuvent transmettre des messages aux clients 12 via la passerelle 13 et peuvent recevoir des messages et des états depuis ces clients 12 via la passerelle 13 également.

La passerelle 13 présente une troisième interface 23 adaptée pour recevoir des messages depuis l'entité de supervision 19. En effet, lorsque l'entité de supervision 19 détermine un nouvel état pour le système de télécommunications 10, elle le transmet à la passerelle 13 afin que ce changement d'état soit émis dans le réseau à destination du serveur 11.

En outre, dans un mode de réalisation de la présente invention, la passerelle 13 est adaptée pour maintenir un historique des communications courantes de l'utilisateur du système 10. Cet historique peut par exemple permettre de consulter le texte des messages envoyés et reçus, l'identité et l'état des interlocuteurs, ainsi qu'une référence temporelle locale des messages envoyés et reçus.

Dans un mode de réalisation de la présente invention, la passerelle 13 est indépendante des dispositifs d'interface 14-16, de ce fait elle peut être localisée n'importe où dans le réseau.

Les dispositifs d'interface 14-16 peuvent être adaptés pour gérer un protocole de messagerie instantanée de sorte à échanger des messages avec le serveur 11 via la passerelle 13. Ainsi, un dispositif d'interface classique peut être utilisé au sein du système client 10 selon un mode de réalisation de la présente invention.

Toutefois, dans le cas où un premier protocole de communication est utilisé entre la passerelle 13 et le serveur 11, on peut prévoir qu'un second protocole, distinct du premier protocole, est mis en oeuvre entre la passerelle 13 et le ou les dispositifs d'interface sélectionnés. Dans ce cas, la passerelle 13 peut être en charge de convertir d'une part le premier protocole dans le second protocole et d'autre part le second protocole dans le premier protocole.

Ainsi, aucune limitation n'est attachée au type de dispositif d'interface dans un système client 10 selon l'invention.

Un dispositif d'interface peut par exemple correspondre à des enceintes acoustiques adaptées pour restituer des messages reçus par synthèse vocale ou encore correspondre à une simple lampe dont l'intensité lumineuse peut croître avec le nombre de messages non lus.

De préférence, les dispositifs d'interface d'un système 10 selon un mode de réalisation de la présente invention, sont répartis dans l'espace dans lequel l'utilisateur est susceptible de se déplacer.

Ainsi, un tel système de télécommunications peut être avantageusement mis en oeuvre au domicile de l'utilisateur. On peut par exemple prévoir un premier écran disposé dans une première pièce du domicile, et des second et troisième écrans disposés dans une seconde pièce.

Des capteurs de localisation et de niveau de luminosité sont disposés de manière pertinente à proximité de ces trois écrans.

Lorsque l'utilisateur se trouve dans la première pièce, il peut recevoir des messages par l'intermédiaire du premier écran depuis un terminal client 12 via le serveur 11. Lorsque l'utilisateur se déplace vers la seconde pièce, les capteurs de localisation captent ce déplacement et transmettent les informations captées à l'entité de supervision 19. Cette entité 19 décide alors de sélectionner un autre écran remplissant les critères de sélection liés à la nouvelle localisation de l'utilisateur par rapport au dispositif sélectionné.

Puis, cette entité de supervision 19 sélectionne un écran parmi le second et le troisième écran situés dans la seconde pièce où se trouve à présent l'utilisateur. A cet effet, l'entité de supervision 19 peut prendre en compte les secondes informations fournies par les capteurs, c'est-à-dire les informations relatives aux contextes sensoriels respectifs des écrans. Ainsi, l'entité de supervision 19 peut sélectionner l'écran auquel correspond le niveau de luminosité le plus bas.

A titre d'exemple, dans une telle implémentation de l'étape de sélection, les critères de localisation sont considérés avant les caractéristiques du contexte sensoriel.

Grâce à de telles dispositions, les dispositifs d'interface 14-16 peuvent être connectés et déconnectés dynamiquement et automatiquement à la passerelle 13.

Un tel système de télécommunications client 10 peut être prévu pour être utilisé par plusieurs utilisateurs. Dans ce contexte, on peut prévoir que les capteurs de localisation sont adaptés pour capter des informations de localisation distinctement pour les utilisateurs respectifs.

On peut également prévoir que ce système comprend une fonction de conversion de mode de communication qui est adaptée pour convertir un mode de communication, par exemple une communication vocale, en un autre mode de communication, par exemple une communication graphique. Une telle fonction peut être centralisée, ou encore répartie dans le système de télécommunications client. Dans le second cas, cette fonction peut être située surtout ou partie des dispositifs d'interface 14-16 du système 10.

Ainsi, par exemple, les enceintes acoustiques peuvent restituer sous une forme sonore vocale à l'utilisateur des messages reçus sous une forme textuelle. Sous forme vocale également, ces enceintes peuvent aussi rappeler l'historique des conversations précédentes notamment.

L'entité de supervision 19 a en charge une adaptation du service de messagerie en fonction de la localisation de l'utilisateur et du contexte sensoriel tel que défini ci-avant.

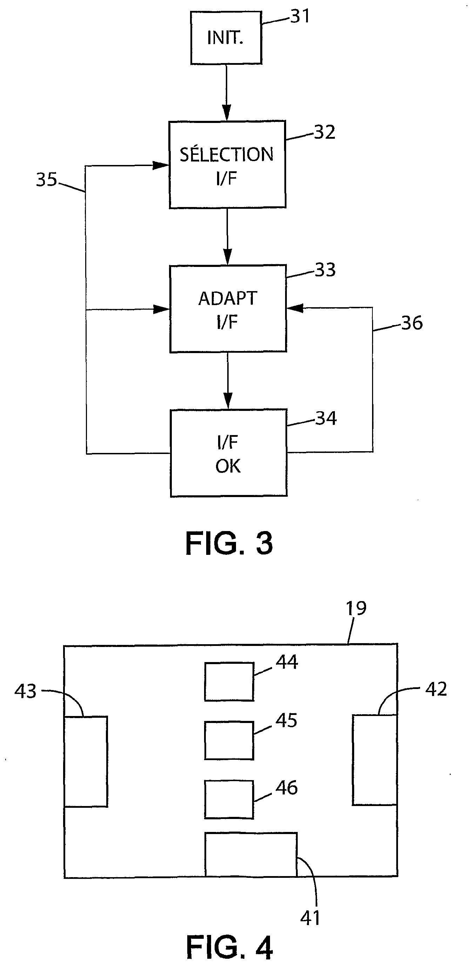

La figure 3 illustre les principales d'un procédé selon la présente invention.

Dans un mode de réalisation de la présente invention, dans une étape d'initialisation 31, l'entité de supervision 19 cherche à se connecter aux capteurs du système, sources d'information de contexte et de localisation, pour être avertie de modifications concernant l'utilisateur et les contextes sensoriels respectifs.

Ensuite, cette entité de supervision 19 initialise la passerelle 13 pour représenter l'utilisateur dans le réseau de messagerie instantanée. Puis, l'entité de supervision peut authentifier l'utilisateur auprès du serveur 11, afin de connecter cette passerelle 13 au serveur 11.

A une étape 32, l'entité de supervision 19 peut alors sélectionner un dispositif d'interface, ou plusieurs dispositifs d'interface, à relier à la passerelle 13 pour une communication de l'utilisateur du système client 10 avec le serveur 11. A cet effet, il peut être avantageux de faire une telle sélection en fonction de la distance ou du lieu géographique où se trouve l'utilisateur par rapport à ces différents dispositifs d'interface 14-16. De préférence, l'architecture du lieu géographique est prise en compte également de sorte à favoriser la sélection du dispositif qui est le plus facilement accessible pour l'utilisateur. Puis, lorsque plusieurs dispositifs d'interface répondent sensiblement aux critères de localisation basés sur l'accessibilité de l'utilisateur aux dispositifs d'interface, l'entité de supervision peut alors avantageusement prendre en compte les secondes informations captées pour sélectionner le plus adapté des dispositifs d'interface parmi ceux qui sont aisément accessibles par l'utilisateur.

Ensuite, l'entité de supervision 19 connecte alors le ou les dispositifs d'interface sélectionnés à la passerelle 13.

Après avoir sélectionné un dispositif d'interface, à l'étape 33, l'entité de supervision 19 détermine un état de l'utilisateur en fonction notamment du type de dispositif d'interface sélectionné. Par exemple, lorsqu'un écran est sélectionné, mais qu'aucun clavier ou dispositif d'interface permettant d'émettre des messages n'est sélectionné, l'état associé au système peut alors être 'lecture seulement', indiquant que seule une lecture de messages reçus peut être effectuée par l'utilisateur.

Puis, l'entité de supervision 19 indique cet état du système client 10 à la passerelle 13, qui est en charge de transmettre cet état au serveur 11. Elle peut également l'indiquer au dispositif d'interface sélectionné, relié à la passerelle 13, ou encore, le cas échéant, à la pluralité de dispositifs d'interface sélectionnés.

A cette étape, cette entité de supervision 19 peut en outre contrôler une adaptation d'une caractéristique du dispositif d'interface sélectionné en fonction des informations relatives au contexte sensoriel de ce dispositif. Ainsi, par exemple, lorsque le dispositif d'interface sélectionné correspond à des enceintes acoustiques, et lorsque dans l'environnement immédiat de ces enceintes acoustiques qui restitue les messages à l'utilisateur sous forme de synthèse vocale, un niveau de bruit ambiant supérieur à un niveau seuil est détecté, l'entité de supervision 19 peut, par exemple, commander à ce dispositif d'interface une augmentation du volume sonore de restitution des messages. A cet effet, la distance entre l'utilisateur et les enceintes peut être également prise en compte.

Dans une variante, l'entité de supervision 19 peut également commander de retarder la restitution des messages reçus. On peut alors prévoir que les clients du serveur 11 sont informés de ce retard.

Une même gestion de la part de l'entité de supervision 19 peut être mise en oeuvre dans le cas où le dispositif d'interface est un écran qui est exposé à une vive luminosité de telle sorte qu'il n'est pas lisible par l'utilisateur.

L'entité de supervision 19 peut aussi recevoir depuis les capteurs des informations indiquant la présence d'une nouvelle personne s'approchant du dispositif d'interface sélectionné pour la communication. Puis, sur réception de ces informations, l'entité de supervision 19 peut décider d'en informer les autres clients 12 du serveur 11.

En outre, afin de préserver l'intimité de la communication, l'historique des anciens messages peut alors être masqué et la transmission de nouveaux messages être interrompue, c'est-à-dire que les enceintes acoustiques peuvent s'éteindre ou un écran peut passer en mode veille. Les autres clients 12 peuvent également être informés de ces conditions via une notification d'un nouvel état indiquant une telle situation.

A l'étape 34, le dispositif d'interface sélectionné peut communiquer avec le réseau de service de messagerie instantanée.

Dans un mode de réalisation de la présente invention, lorsque le capteur 17A informe l'entité de supervision 19 d'un changement de localisation, on peut prévoir soit de retourner, dans la succession d'étapes décrites ci-avant, à l'étape 32, soit de retourner à l'étape 33. En effet, lorsque, par exemple, l'utilisateur change de pièce, depuis une pièce dans laquelle se situe le dispositif d'interface courant en communication vers une pièce dans laquelle se situe un autre dispositif d'interface qui n'est pas relié à la passerelle 13, il peut être préférable de sélectionner cet autre dispositif d'interface. En revanche, si la pièce dans laquelle se situe à présent l'utilisateur ne contient pas de dispositif d'interface, il peut être avantageux de conserver le dispositif d'interface courant et de chercher à adapter une ou plusieurs caractéristiques du dispositif d'interface courant sélectionné de sorte à améliorer la communication. Ainsi, lorsque le dispositif d'interface présente une sortie son, l'entité de supervision peut alors requérir auprès de ce dispositif une augmentation de volume sonore pour la restitution des messages reçus, afin que l'utilisateur puisse recevoir ces messages, même au cours de son déplacement.

Pour l'étape de sélection, l'entité de supervision peut prendre en considération des critères de sélection de dispositifs relatifs à la proximité physique de l'utilisateur par rapport aux dispositifs, ou plus exactement, des critères relatifs à l'accessibilité de l'utilisateur aux différents dispositifs d'interface. En effet, dans le cas où seul le critère de proximité physique est pris en compte, un dispositif d'interface pourrait alors être sélectionné alors qu'il est séparé de l'utilisateur par une cloison car il est situé dans une autre pièce.

Une telle étape de sélection peut prendre en compte également un critère relatif à la disponibilité des dispositifs d'interface. En effet, il parait avantageux de ne pas sélectionner un dispositif déjà en cours d'utilisation.

Des critères variés peuvent encore être considérés pour fonder la sélection d'un dispositif d'interface.

Puis, au cours du fonctionnement du système de télécommunications 10, lorsque le contexte sensoriel du dispositif d'interface et/ou la localisation de l'utilisateur est modifié, l'entité de supervision 19 reçoit des informations captées lui indiquant ces modifications. Elle est à ce stade en mesure d'effectuer une nouvelle étape de sélection de dispositif d'interface, puis de déterminer l'état courant du système 10 suite à cette dernière sélection et d'informer le serveur 11, via la passerelle 13 de ce nouvel état du système client 10.

La figure 4 illustre une architecture d'une entité de supervision 19 comprenant une première unité d'interface 41 adaptée pour recevoir les informations relatives aux environnements respectifs des dispositifs d'interface, ou encore dans un mode de réalisation de la présente invention, les premières et/ou secondes informations depuis le capteur. Elle comprend aussi une unité de sélection 44 adaptée pour sélectionner un dispositif d'interface parmi ladite pluralité de dispositifs d'interface. Elle comprend en outre une deuxième unité d'interface 42 adaptée pour communiquer avec le dispositif d'interface sélectionné de sorte à le relier à la passerelle 13.

Une troisième unité d'interface 43 est adaptée pour communiquer avec la passerelle 13. De plus, une unité de détermination 45 est adaptée pour déterminer de manière automatique un état associé au système de télécommunications 10 en fonction d'au moins une caractéristique du dispositif d'interface sélectionné, et la première unité d'interface 41 est alors adaptée pour transmettre l'état déterminé à la passerelle 13. En outre, une unité de contrôle 46 est adaptée pour contrôler au moins une caractéristique du dispositif d'interface sélectionné en fonction des premières et/ou secondes informations.

Un tel système de télécommunications client 10 permet notamment une gestion automatique de l'adaptation d'une communication en fonction de différentes informations captées dans l'environnement de l'utilisateur. Il permet également une détermination automatique de changement d'état du système à transmettre à un serveur, notamment de messagerie instantanée.
Un mode de réalisation de la présente invention est aisé à mettre en oeuvre dans un réseau offrant un service de messagerie instantanée déjà existant, notamment parce que l'interface d'un tel système avec le serveur peut être similaire à une interface d'un terminal client existant avec le serveur.

## Revendications

1. Procédé de gestion d'une communication entre un réseau et un système de télécommunications (10), comprenant une passerelle (13) reliant ledit système de télécommunications et ledit réseau, une pluralité de dispositifs d'interface (14-16) d'un utilisateur, chacun pouvant être relié à ladite passerelle (13), et au moins un capteur (17A, 17B) d'informations relatives aux environnements respectifs desdits dispositifs d'interface (14-16) ;
ledit procédé comprenant les étapes suivantes :
/a/ capter au niveau du capteur des premières informations relatives à une localisation de l'utilisateur dans des environnements respectifs des dispositifs d'interface (14-16) et des deuxièmes informations relatives à un paramètre sensoriel définissant un contexte sensoriel des environnements respectifs des dispositifs d'interface de l'utilisateur ;
/a'/ déterminer des niveaux d'accessibilité par l'utilisateur des dispositifs d'interface (14-16) à partir des premières informations ;
/a"/ déterminer des niveaux de qualité des contextes sensoriels des dispositifs d'interface de l'utilisateur à partir des deuxièmes informations ;
/b/ en fonction desdites informations captées, sélectionner (32) un dispositif d'interface parmi la pluralité des dispositifs d'interface (14-16) sur la base d'un premier critère de sélection correspondant au niveau d'accessibilité le plus élevé et/ou d'un deuxième critère de sélection correspondant au niveau de qualité le plus élevé ;
/c/ relier (34) le dispositif d'interface sélectionné avec la passerelle (13) de sorte à permettre une communication entre le dispositif d'interface sélectionné et le réseau.

2. Procédé de gestion d'une communication selon la revendication 1, comprenant en outre les étapes suivantes, après une sélection d'un dispositif d'interface :
- déterminer un état du système de télécommunications (10) en fonction d'au moins une caractéristique du dispositif d'interface sélectionné ; et
- transmettre ledit état du système (10) au réseau.

3. Procédé de gestion d'une communication selon l'une quelconque des revendications précédentes, comprenant en outre, après l'étape /c/, les étapes suivantes :
- recevoir au niveau du capteur (17A, 17B) de nouvelles informations relatives aux environnements respectifs des dispositifs d'interface (14-16) ;
- si le critère de sélection n'est plus rempli par le dispositif d'interface sélectionné au regard desdites nouvelles informations, sélectionner un autre dispositif d'interface ;
- déterminer, le cas échéant, un nouvel état du système de télécommunications (10) en fonction d'au moins une caractéristique dudit autre dispositif d'interface sélectionné et transmettre ledit nouvel état du système (10) au réseau.

4. Procédé de gestion d'une communication selon l'une quelconque des revendications précédentes, dans lequel, lorsque des données sont reçues par la passerelle (13) selon un premier mode de communication et lorsque le dispositif d'interface sélectionné est adapté pour communiquer suivant un second mode de communication, lesdites données reçues selon le premier mode de communication sont converties en des données selon le second mode de communication.

5. Procédé de gestion d'une communication selon l'une quelconque des revendications précédentes, dans lequel au moins une caractéristique du dispositif d'interface sélectionné est contrôlée en fonction des informations relatives aux environnements respectifs des dispositifs d'interface.

6. Procédé de gestion d'une communication selon l'une quelconque des revendications précédentes dans lequel la communication entre le système de télécommunications et le réseau est une communication entre le système de télécommunications et un serveur (11) dudit réseau et dans lequel la passerelle est cliente dudit serveur.

7. Entité de supervision (19) dans un système de télécommunications (10) adapté pour gérer une communication avec un réseau ;
ledit système de télécommunications (10) comprenant une passerelle (13), une pluralité de dispositifs d'interface (14-16), chacun pouvant être relié à ladite passerelle, et au moins un capteur (17A, 17B) captant au moins des informations relatives à des contextes sensoriels dans des environnements respectifs des dispositifs d'interface (14-16) ;
ladite entité de supervision (19) comprenant :
- une première unité d'interface (41) adaptée pour recevoir lesdites premières informations relatives à une localisation de l'utilisateur dans des environnements respectifs des dispositifs d'interface (14-16) et des deuxièmes informations relatives à un paramètre sensoriel définissant un contexte sensoriel des environnements respectifs des dispositifs d'interface de l'utilisateur depuis le capteur ;
- une unité de sélection (44) adaptée pour
- déterminer des niveaux d'accessibilité par l'utilisateur des dispositifs d'interface (14-16) à partir des premières informations ;
- déterminer des niveaux de qualité des contextes sensoriels des dispositifs d'interface de l'utilisateur à partir des deuxièmes informations ;
- sélectionner un dispositif d'interface parmi ladite pluralité de dispositifs d'interface (14-16) sur la base d'un premier critère de sélection correspondant au niveau d'accessibilité le plus élevé et/ou d'un deuxième critère de sélection correspondant au niveau de qualité le plus élevé ;
- une deuxième unité d'interface (42) adaptée pour communiquer avec le dispositif d'interface sélectionné de sorte à le relier à ladite passerelle (13) ; et
- une troisième unité d'interface (43) adaptée pour communiquer avec la passerelle (13).

8. Entité de supervision (19) selon la revendication 7, comprenant en outre une unité de détermination (45) adaptée pour déterminer un état associé au système de télécommunications (10) en fonction d'au moins une caractéristique du dispositif d'interface sélectionné, la première unité d'interface (41) étant adaptée pour transmettre l'état déterminé à la passerelle (13).

9. Système de télécommunications (10) adapté pour gérer une communication avec un réseau ;
ledit système de télécommunications (10) comprend :
une passerelle (13) comprenant une première unité d'interface (21) adaptée pour communiquer avec le réseau ; et une deuxième unité d'interface (22) adaptée pour communiquer avec au moins un dispositif d'interface sélectionné parmi ladite pluralité de dispositifs d'interface (14-16) en fonction des informations captées ;
- une pluralité de dispositifs d'interface (14-16), chacun comprenant une première interface adaptée pour recevoir une commande de connexion entre ledit dispositif d'interface et la passerelle (13) ; une seconde unité d'interface adaptée pour connecter, sur réception de ladite commande, ledit dispositif d'interface avec la passerelle (13), puis pour communiquer avec le réseau via la passerelle (13) et pouvant être relié à ladite passerelle (13) ;
au moins un capteur (17A, 17B) d'informations relatives aux environnements respectifs des dispositifs d'interface (14-16) ;
une entité de supervision (19) selon l'une quelconque des revendications 7 et 8.

10. Programme d'ordinateur destiné à être installé dans une entité de supervision, comprenant des instructions aptes à mettre en oeuvre un procédé selon l'une quelconque des revendications 1 à 6, lors d'une exécution du programme par des moyens de traitement de l'entité de supervision selon l'une quelconque des revendications 7 à 8.

11. Support d'enregistrement lisible par un ordinateur sur lequel est enregistré le programme d'ordinateur selon la revendication 10.

## Patentansprüche

1. Verfahren zum Steuern einer Kommunikation zwischen einem Netz und einem Telekommunikationssystem (10) mit einem Gateway (13), der das Telekommunikationssystem und das Netz verbindet, mehreren Schnittstellenvorrichtungen (14-16) eines Benutzers, die jeweils mit dem Gateway (13) verbunden werden können, und mindestens einem Sensor (17A, 17B) für Informationen in Bezug auf die jeweiligen Umgebungen der Schnittstellenvorrichtungen (14-16);
wobei das Verfahren die folgenden Schritte umfasst:
/a/ Erfassen von ersten Informationen in Bezug auf eine Lokalisierung des Benutzers in jeweiligen Umgebungen der Schnittstellenvorrichtungen (14-16) und zweiten Informationen in Bezug auf einen sensorischen Parameter, der einen sensorischen Kontext der jeweiligen Umgebungen der Schnittstellenvorrichtungen des Benutzers definiert, auf der Höhe des Sensors;
/a'/ Bestimmen von Niveaus der Zugänglichkeit durch den Benutzer der Schnittstellenvorrichtungen (14-16) anhand der ersten Informationen;
/a"/ Bestimmen von Qualitätsniveaus der sensorischen Kontexte der Schnittstellenvorrichtungen des Benutzers anhand der zweiten Informationen;
/b/ in Abhängigkeit von den erfassten Informationen Auswählen (32) einer Schnittstellenvorrichtung aus den mehreren Schnittstellenvorrichtungen (14-16) auf der Basis eines ersten Auswahlkriteriums, das dem höchsten Zugänglichkeitsniveau entspricht, und/oder eines zweiten Auswahlkriteriums, das dem höchsten Qualitätsniveau entspricht;
/c/ Verbinden (34) der ausgewählten Schnittstellenvorrichtung mit dem Gateway (13), um eine Kommunikation zwischen der ausgewählten Schnittstellenvorrichtung und dem Netz zu ermöglichen.

2. Verfahren zum Steuern einer Kommunikation nach Anspruch 1, das außerdem die folgenden Schritte nach einer Auswahl einer Schnittstellenvorrichtung umfasst:
- Bestimmen eines Zustandes des Telekommunikationssystems (10) in Abhängigkeit von mindestens einer Eigenschaft der ausgewählten Schnittstellenvorrichtung; und
- Übertragen des Zustandes des Systems (10) zum Netz.

3. Verfahren zum Steuern einer Kommunikation nach einem der vorangehenden Ansprüche, das außerdem nach dem Schritt /c/ die folgenden Schritte umfasst:
- Empfangen von neuen Informationen in Bezug auf die jeweiligen Umgebungen der Schnittstellenvorrichtungen (14-16) auf der Höhe des Sensors (17A, 17B);
- wenn das Auswahlkriterium durch die ausgewählte Schnittstellenvorrichtung im Hinblick auf die neuen Informationen nicht mehr erfüllt wird, Auswählen einer anderen Schnittstellenvorrichtung;
- gegebenenfalls Bestimmen eines neuen Zustandes des Telekommunikationssystems (10) in Abhängigkeit von mindestens einer Eigenschaft der anderen ausgewählten Schnittstellenvorrichtung und Übertragen des neuen Zustandes des Systems (10) zum Netz.

4. Verfahren zum Steuern einer Kommunikation nach einem der vorangehenden Ansprüche, bei dem, wenn vom Gateway (13) gemäß einem ersten Kommunikationsmodus Daten empfangen werden und wenn die ausgewählte Schnittstellenvorrichtung dazu ausgelegt ist, gemäß einem zweiten Kommunikationsmodus zu kommunizieren, die gemäß dem ersten Kommunikationsmodus empfangenen Daten in Daten gemäß dem zweiten Kommunikationsmodus umgewandelt werden.

5. Verfahren zum Steuern einer Kommunikation nach einem der vorangehenden Ansprüche, bei dem mindestens eine Eigenschaft der ausgewählten Schnittstellenvorrichtung in Abhängigkeit von den Informationen in Bezug auf die jeweiligen Umgebungen der Schnittstellenvorrichtungen gesteuert wird.

6. Verfahren zum Steuern einer Kommunikation nach einem der vorangehenden Ansprüche, bei dem die Kommunikation zwischen dem Telekommunikationssystem und dem Netz eine Kommunikation zwischen dem Telekommunikationssystem und einem Server (11) des Netzes ist und bei dem der Gateway ein Client des Servers ist.

7. Überwachungsentität (19) in einem Telekommunikationssystem (10), die dazu ausgelegt ist, eine Kommunikation mit einem Netz zu steuern;
wobei das Telekommunikationssystem (10) einen Gateway (13), mehrere Schnittstellenvorrichtungen (14-16), die jeweils mit dem Gateway verbunden werden können, und mindestens einen Sensor (17A, 17B), der zumindest Informationen in Bezug auf sensorische Kontexte in jeweiligen Umgebungen der Schnittstellenvorrichtungen (14-16) erfasst, umfasst;
wobei die Überwachungsentität (19) umfasst:
- eine erste Schnittstelleneinheit (41), die dazu ausgelegt ist, die ersten Informationen in Bezug auf eine Lokalisierung des Benutzers in jeweiligen Umgebungen der Schnittstellenvorrichtungen (14-16) und zweite Informationen in Bezug auf einen sensorischen Parameter, der einen sensorischen Kontext der jeweiligen Umgebungen der Schnittstellenvorrichtungen des Benutzers definiert, vom Sensor zu empfangen;
- eine Auswahleinheit (44), die ausgelegt ist zum
- Bestimmen von Niveaus der Zugänglichkeit durch den Benutzer der Schnittstellenvorrichtungen (14-16) anhand der ersten Informationen;
- Bestimmen von Qualitätsniveaus der sensorischen Kontexte der Schnittstellenvorrichtungen des Benutzers anhand der zweiten Informationen;
- Auswählen einer Schnittstellenvorrichtung aus den mehreren Schnittstellenvorrichtungen (14-16) auf der Basis eines ersten Auswahlkriteriums, das dem höchsten Zugänglichkeitsniveau entspricht, und/oder eines zweiten Auswahlkriteriums, das dem höchsten Qualitätsniveau entspricht;
- eine zweite Schnittstelleneinheit (42), die dazu ausgelegt ist, mit der ausgewählten Schnittstellenvorrichtung zu kommunizieren, um sie mit dem Gateway (13) zu verbinden; und
- eine dritte Schnittstelleneinheit (43), die dazu ausgelegt ist, mit dem Gateway (13) zu kommunizieren.

8. Überwachungsentität (19) nach Anspruch 7, die außerdem eine Bestimmungseinheit (45) umfasst, die dazu ausgelegt ist, einen Zustand, der dem Telekommunikationssystem (10) zugeordnet ist, in Abhängigkeit von mindestens einer Eigenschaft der ausgewählten Schnittstellenvorrichtung zu bestimmen, wobei die erste Schnittstelleneinheit (41) dazu ausgelegt ist, den bestimmten Zustand zum Gateway (13) zu übertragen.

9. Telekommunikationssystem (10), das dazu ausgelegt ist, eine Kommunikation mit einem Netz zu steuern;
wobei das Telekommunikationssystem (10) Folgendes umfasst:
einen Gateway (13) mit einer ersten Schnittstelleneinheit (21), die dazu ausgelegt ist, mit dem Netz zu kommunizieren; und einer zweiten Schnittstelleneinheit (22), die dazu ausgelegt ist, mit mindestens einer aus den mehreren Schnittstellenvorrichtungen (14-16) ausgewählten Schnittstellenvorrichtung in Abhängigkeit von den erfassten Informationen zu kommunizieren;
- mehrere Schnittstellenvorrichtungen (14-16), die jeweils eine erste Schnittstelle, die dazu ausgelegt ist, einen Befehl zur Verbindung zwischen der Schnittstellenvorrichtung und dem Gateway (13) zu empfangen; eine zweite Schnittstelleneinheit, die dazu ausgelegt ist, beim Empfang des Befehls die Schnittstellenvorrichtung mit dem Gateway (13) zu verbinden, dann mit dem Netz über den Gateway (13) zu kommunizieren, umfassen, und mit dem Gateway (13) verbunden werden können;
mindestens einen Sensor (17A, 17B) für Informationen in Bezug auf die jeweiligen Umgebungen der Schnittstellenvorrichtungen (14-16);
eine Überwachungsentität (19) nach einem der Ansprüche 7 und 8.

10. Computerprogramm, das auf einer Überwachungsentität installiert werden soll, das Befehle umfasst, die ein Verfahren nach einem der Ansprüche 1 bis 6 bei einer Ausführung des Programms durch Verarbeitungsmittel der Überwachungsentität nach einem der Ansprüche 7 bis 8 ausführen können.

11. Aufzeichnungsträger, der durch einen Computer lesbar ist, auf dem das Computerprogramm nach Anspruch 10 aufgezeichnet ist.

## Claims

1. Method for managing a communication between a network and a telecommunications system (10), comprising a gateway (13) linking said telecommunications system and said network, a plurality of interface devices (14-16) of a user, each being able to be linked to said gateway (13), and at least one sensor (17A, 17B) of information relating to the respective environments of said interface devices (14-16) ;
said method comprising the following steps:
/a/ sensing at the level of the sensor first information relating to a location of the user in respective environments of the interface devices (14-16) and second information relating to a sensory parameter defining a sensory context of the respective environments of the interface devices of the user;
/a'/ determining levels of accessibility by the user of the interface devices (14-16) on the basis of the first information;
/a"/ determining levels of quality of the sensory contexts of the interface devices of the user on the basis of the second information;
/b/ as a function of said sensed information, selecting (32) an interface device from among the plurality of interface devices (14-16) on the basis of a first selection criterion corresponding to the highest accessibility level and/or of a second selection criterion corresponding to the highest quality level;
/c/ linking (34) the selected interface device with the gateway (13) so as to allow a communication between the selected interface device and the network.

2. Method for managing a communication according to Claim 1, furthermore comprising the following steps, after selection of an interface device:
- determining a state of the telecommunications system (10) as a function of at least one characteristic of the selected interface device; and
- transmitting said state of the system (10) to the network.

3. Method for managing a communication according to any one of the preceding claims, furthermore comprising, after step /c/, the following steps:
- receiving at the level of the sensor (17A, 17B) new information relating to the respective environments of the interface devices (14-16);
- if the selection criterion is no longer fulfilled by the interface device selected in regard to said new information, selecting another interface device;
- determining, if relevant, a new state of the telecommunications system (10) as a function of at least one characteristic of said other selected interface device and transmitting said new state of the system (10) to the network.

4. Method for managing a communication according to any one of the preceding claims, in which, when data are received by the gateway (13) according to a first mode of communication and when the selected interface device is adapted to communicate according to a second mode of communication, said data received according to the first mode of communication are converted into data according to the second mode of communication.

5. Method for managing a communication according to any one of the preceding claims, in which at least one characteristic of the selected interface device is controlled as a function of the information relating to the respective environments of the interface devices.

6. Method for managing a communication according to any one of the preceding claims in which the communication between the telecommunications system and the network is a communication between the telecommunications system and a server (11) of said network and in which the gateway is client of said server.

7. Supervision entity (19) in a telecommunications system (10) adapted to manage a communication with a network;
said telecommunications system (10) comprising a gateway (13), a plurality of interface devices (14-16), each being able to be linked to said gateway, and at least one sensor (17A, 17B) sensing at least information relating to sensory contexts in respective environments of the interface devices (14-16);
said supervision entity (19) comprising:
- a first interface unit (41) adapted to receive said first information relating to a location of the user in respective environments of the interface devices (14-16) and second information relating to a sensory parameter defining a sensory context of the respective environments of the interface devices of the user from the sensor;
- a selection unit (44) adapted to
- determine levels of accessibility by the user of the interface devices (14-16) on the basis of the first information;
- determine levels of quality of the sensory contexts of the interface devices of the user on the basis of the second information;
- select an interface device from among said plurality of interface devices (14-16) on the basis of a first selection criterion corresponding to the highest accessibility level and/or of a second selection criterion corresponding to the highest quality level;
- a second interface unit (42) adapted to communicate with the selected interface device so as to link it to said gateway (13); and
- a third interface unit (43) adapted to communicate with the gateway (13).

8. Supervision entity (19) according to Claim 7, furthermore comprising a determination unit (45) adapted to determine a state associated with the telecommunications system (10) as a function of at least one characteristic of the selected interface device, the first interface unit (41) being adapted to transmit the determined state to the gateway (13).

9. Telecommunications system (10) adapted to manage a communication with a network;
said telecommunications system (10) comprises:
a gateway (13) comprising a first interface unit (21) adapted to communicate with the network; and a second interface unit (22) adapted to communicate with at least one interface device selected from among said plurality of interface devices (14-16) as a function of the information sensed;
- a plurality of interface devices (14-16), each comprising a first interface adapted to receive a command for connection between said interface device and the gateway (13); a second interface unit adapted to connect, on receipt of said command, said interface device with the gateway (13), and then to communicate with the network via the gateway (13) and being able to be linked to said gateway (13);
at least one sensor (17A, 17B) of information relating to the respective environments of the interface devices (14-16);
a supervision entity (19) according to either one of Claims 7 and 8.

10. Computer program intended to be installed in a supervision entity, comprising instructions able to implement a method according to any one of Claims 1 to 6, during an execution of the program by processing means of the supervision entity according to either one of Claims 7 and 8.

11. Recording medium readable by a computer on which the computer program according to Claim 10 is recorded.
